# NEW EUROPEAN PATENT SPECIFICATION

(11) **EP 3 196 354 B2**
(45) Date of publication and mention of the opposition decision: **30.11.2022**
(45) Mention of the grant of the patent: 12.06.2019
(21) Application number: 15828190.7
(22) Date of filing: 28.07.2015
(51) Int. Cl.: D07B 1/06, B60C 9/00

(54) **STEEL CORD FOR REINFORCING RUBBER ARTICLE**
STAHLSEIL ZUR VERSTÄRKUNG EINES GUMMIARTIKELS
CÂBLÉ MÉTALLIQUE POUR RENFORCEMENT D'ARTICLES EN CAOUTCHOUC

(30) Priority: 28.07.2014 JP 2014153033
(43) Date of publication of application: 26.07.2017
(73) Proprietor: Bridgestone Corporation, Tokyo 104-8340 (JP)
(72) Inventor: NOZAKI, Yusuke, Tokyo 104-8340 (JP)
(74) Representative: Marks & Clerk LLP
(86) International application number: PCT/JP2015/071407
(87) International publication number: WO 2016/017655

(56) References cited:
- EP-B1- 0 849 098
- WO-A1-01/34900
- WO-A1-2010/126084
- WO-A1-2011/116493
- WO-A1-2015/090920
- JP-A- 2001 011 784
- JP-A- 2001 114 143
- JP-A- 2008 150 757
- JP-A- 2009 052 177
- JP-A- 2009 242 983
- JP-A- 2011 042 910
- JP-A- 2016 056 456
- Roop S. Bhakuni ET AL: "Tire Cord", Kirk-Othmer Encyclopedia of Chemical Technology, 4 December 2000 (2000-12-04), XP055472079, Retrieved from the Internet: URL:https://onlinelibrary.wiley.com/doi/pd f/10.1002/0471238961.2009180502080111.a01 [retrieved on 2018-05-03]
- English translation JP 2001114143
- "Non-parallel steel wire and cords for tyre reinforcement", ISO 17832:2009, July 2009 (2009-07),

## Description

### TECHNICAL FIELD

The present invention relates to a steel cord for reinforcing a rubber article (hereinafter, also simply referred to as "cord"), and particularly to a steel cord for reinforcing a rubber article for use in reinforcing applications for rubber articles such as tires.

### BACKGROUND ART

For a rubber article such as a tire, a steel cord formed by twisting a plurality of steel filaments is widely used as a reinforcing material. In particular, since a tire used for a heavy duty vehicle such as a construction vehicle is used under heavy loading on rough terrain having sharp rises or drops or the like, a steel cord to be used as a reinforcing material is demanded to have a particularly high strength and resistance. For this reason, in such a large, tire a steel cord having a so-called multi-twisted structure, which is formed by twisting a plurality of strands formed by twisting a plurality of steel filaments, is employed.

As a prior art relating to a steel cord having a multi-twisted structure, for example, Patent Document 1 discloses a technique in which, in a steel cord for reinforcing a rubber article having a multi-twisted structure formed by twisting a plurality of strands having a layered-twisted structure in which a plurality of steel filaments are twisted, the ratio dc/ds of the diameter dc of an outermost layer sheath filament constituting an outermost layer sheath of a core strand to the diameter ds of an outermost layer sheath filament constituting an outermost layer sheath of a sheath strand is set to from 1.05 to 1.25 to prevent the occurrence of a preceding break of an outermost layer filament, thereby improving the cord strength.

### RELATED ART DOCUMENT

### PATENT DOCUMENT

Patent Document 1: Japanese Unexamined Patent Application Publication No. 2009-299223 (Claims and the like)

### SUMMARY OF THE INVENTION

### PROBLEMS TO BE SOLVED BY THE INVENTION

For tires used in construction vehicles or the like, resistance to blunt or acute protrusions such as rocks, that is, cut resistance is also important. In order to increase the cut resistance in a cord having a multi-twisted structure, improvement of the resistance of a core strand to tightening of a sheath strand is considered, and a technique described in Patent Document 1 is also known.

However, under the demand for further improvement in the tire performance in recent years, realization of a tire whose cut resistance is further improved is also demanded.

Accordingly an object of the present invention is to provide a steel cord for reinforcing a rubber article which can further improve cut resistance when applied to a tire.

### MEANS FOR SOLVING THE PROBLEMS

The present inventor intensively studied to find that the above-described problems can be solved by employing the following configuration, thereby completing the present invention.

That is, the steel cord for reinforcing a rubber article of a first aspect of the present invention is a steel cord for reinforcing a rubber article comprising: one core strand having a layered-twisted structure formed by twisting a plurality of steel filaments; and a plurality of sheath strands having a layered-twisted structure formed by twisting a plurality of steel filaments, wherein the sheath strands are twisted around the core strand,
wherein a ratio S1/S of the sum S1 of cross-sectional areas of outermost layer sheath filaments constituting an outermost layer sheath of the core strand to the sum S of cross-sectional areas of all filaments constituting the core strand is from 0.71 to 0.73, and a ratio Ps/P of the sum Ps of strengths, that is the breaking loads in Newtons, of the sheath strands to strength P, that is the breaking load in Newtons, of the cord as a whole is from 0.81 to 0.85, the breaking load of the cord as a whole being calculated by summing up the breaking loads of the core strands and sheath strands measured individually, and wherein the number of sheath strands is from 7 to 9.

In the cord of the first aspect of the present invention, preferably, all the filaments constituting the core strand have the same diameter. Further, in the cord of the first aspect of the present invention, preferably, a cord diameter is equal to or more than 5.00 mm.

A pneumatic tire of a second aspect of the present invention comprises a reinforcing material, wherein said reinforcing material comprises the steel cord for reinforcing a rubber article of the first aspect of the present invention.

### EFFECTS OF THE INVENTION

According to the present invention, it becomes possible to realize a steel cord for reinforcing a rubber article which can further improve cut resistance when applied to a tire.

### BRIEF DESCRIPTION OF THE DRAWING

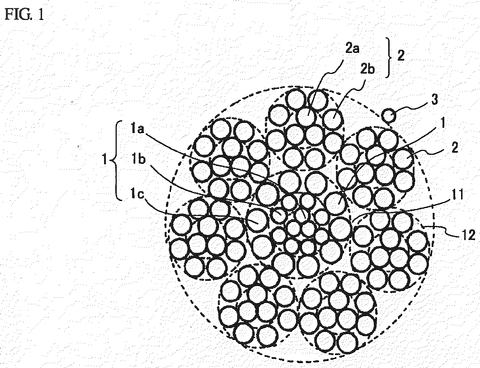

FIG. 1 is a cross-sectional view in the width direction illustrating one configuration example of a steel cord for reinforcing a rubber article of the present invention.

### MODES FOR CARRYING OUT THE INVENTION

Hereinafter, embodiments of the present invention will be described in detail with reference to the drawing.

FIG. 1 is a cross-sectional view in the width direction illustrating one configuration example of a steel cord for reinforcing a rubber article of the present invention. As illustrated in the drawing, the cord of the present invention comprises: one core strand 11 having a three-layered layered-twisted structure formed by twisting a plurality of steel filaments 1; and a plurality of (in the illustrated example, seven) sheath strands 12 each having two-layered layered-twisted structure formed by twisting a plurality of steel filaments 2, and has a multi-twisted structure formed by twisting the sheath strands 12 around the core strand 11. In the illustrated cord, the core strand 11 has a 3+8+10 structure in which a first sheath is formed by twisting eight first sheath filaments 1b around a core composed of twisted three core filaments 1a and a second sheath is formed by twisting ten second sheath filaments 1c therearound, and the sheath strand 12 has a 3+8 structure in which a sheath is formed by twisting eight sheath filaments 2b around a core composed of twisted three core filaments 2a. In the illustrated cord, a spiral filament 3 is spirally wound around the outer periphery of the sheath strand 12.

In the present invention, it is important that the ratio S1/S of the sum S1 of the cross-sectional areas of outermost layer sheath filaments 1c constituting an outermost layer sheath of the core strand 11 to the sum S of the cross-sectional areas of all filaments constituting the core strand 11 is from 0.69 to 0.74, and the ratio Ps/P of the sum Ps of the strengths of the sheath strands 12 to the strength P of the cord as a whole is from 0.81 to 0.85. Since a preceding break of an outermost layer filament of a core strand caused by tightening of the core strand by a sheath strand causes decrease in the shear resistance of the cord, in order to prevent an occurrence of such a preceding break, a decrease in the tightening force of a sheath strand and an increase in the shear resistance of an outermost layer filament of a core strand are considered. Here, the magnitude of the tightening force of a core strand by a sheath strand is proportional to the magnitude of the strength of the sheath strand, and the shear resistance of an outermost layer filament of a core strand depends on the magnitude of the total cross-sectional areas of the outermost layer filaments of the core strand. Therefore, in the present invention, the ratio of the total strength of the sheath strand 12 to the strength of the cord is set relatively low from 0.81 to 0.85, thereby decreasing the tightening force of the sheath strand, and at the same time, the ratio of the total cross-sectional areas of outermost layer filaments of the core strand to total cross-sectional areas of the filaments is set relatively high from 0.69 to 0.74, thereby improving the shear resistance of an outermost layer filament of a core strand. This makes it possible to unprecedentedly increase the shear resistance of the cord as a whole.

The value of the above-described ratio S1/S needs to be from 0.69 to 0.74, and more specifically, is in the range of from 0.71 to 0.73. When the value of S1/S is less than 0.69, a preceding break of an outermost layer filament of a core strand cannot be prevented. On the other hand, when the value of S1/S is more than 0.74, a filament inside an outermost layer sheath of the core strand becomes too thin, which may cause a preceding break. The value of the above-described ratio Ps/P needs to be from 0.81 to 0.85, and preferably is in the range from 0.81 to 0.83. When the value of Ps/P is more than 0.85, the stress of tightening a core strand is large, which deteriorates the shear resistance of the cord. On the other hand, when the value of Ps/P is less than 0.81, the shear resistance of the sheath strand for itself deteriorates. The absolute value of the sum S1 of the cross-sectional areas of outermost layer sheath filaments constituting an outermost layer sheath of the core strand depends on the diameter of the cord or the like, and is, from the viewpoint of securing a high shear resistance, suitably not less than 1.33 mm², for example, from 1.60 to 1.90 mm².

In the cord of the present invention, the number of layers of the layered-twisted structure of the core strand is not particularly limited, and may be, for example, from 2 to 3. In this case, assuming that a first sheath and a second sheath are sequentially formed from the inner layer of the layered-twisted structure, when the core strand 11 has a three-layered layered-twisted structure as illustrated in FIG. 1, the outermost layer sheath of the core strand 11 is the second sheath. The number of layers of the layered-twisted structure of the sheath strand is not particularly limited, and may be, for example, from 2 to 3.

In the cord of the present invention, the number of the sheath strand 12 is from 7 to 9. In a non-claimed embodiment, when all the core strand and sheath strands have the same diameter and the sheath strands are close-packed without a gap therebetween, six sheath strands can be arranged. However, as illustrated in the drawing, in the present invention, since the diameter of the sheath strand 12 is smaller than that of the core strand 11, seven to nine sheath strands 12 can be arranged. Accordingly, by setting the number of the sheath strands 12 to from 7 to 9, a sufficiently strong core strand which can endure the tightening force of the sheath strand can be realized, thereby further improving the cut resistance of the cord.

In the cord of the present invention, when a core strand has a two-layered structure, it is preferable that all filaments constituting the core strand have the same diameter. Although it is possible to improve the shear resistance by making the diameter of the core filament smaller than the diameter of the sheath filament in the core strand, in this case, it is difficult to secure a sufficient amount of clearance between the sheath filaments. Accordingly, when a core strand has a two-layered structure, it is preferable that all filaments constituting the core strand have the same diameter. Similarly, as illustrated, when a core strand have a three-layered structure, it is preferable that, among filaments constituting the core strand 11, all of core filaments 1a and first sheath filaments 1b have the same diameter. When the core filament 1a is made smaller in diameter than the first sheath filament 1b in the core strand 11, it is difficult to ensure sufficient amount of clearance between first sheath filaments. Accordingly, when the core strand has a three-layered structure, it is preferable that all the core filaments 1a and first sheath filaments 1b have the same diameter.

Further, the cord diameter of the cord of the present invention is preferably 5.00 mm or more, for example, from 5.00 to 6.00 mm. By using a cord having a diameter of 5.00 mm or more, it is possible to secure both strength and cut resistance required, particularly for large tires used for heavy duty vehicles such as construction vehicles.

In the cord of the present invention, the wire diameter and tensile strength of the filament to be used, the twisting direction, the twisting pitch, and the like of the filament or strand are not particularly limited, and can be appropriately selected according to the ordinary method as desired. For example, as the filament, a so-called high tensile strength steel having a carbon content of 0.80% by mass or more can be used. The cord of the present invention may or may not include a spiral filament.

Since the cord of the present invention is excellent in cut resistance, it is particularly suitable for a reinforcing material of large tires used for heavy duty vehicles such as construction vehicles, among others, ultra-large off-road radial tires having a tire size of about 40.00 R57. Such a large tire usually comprises: one or more carcasses composed of plies of steel cords extending in the radial direction between a pair of bead cores; at least four belt-crossing layers arranged radially outside the crown portion of the crown portion; and a tread disposed outside in the tire radial direction. The cord of the present invention can be used, for example, as a reinforcing cord for a belt crossing layer in such a tire.

### EXAMPLES

Hereinafter, the present invention will be described in more detail by way of examples. Reference Example 6 is not according to the present invention.

As shown in the following Tables, the ratio S1/S of the sum S1 of the cross-sectional areas of outermost layer sheath filaments constituting an outermost layer sheath of the core strand to the sum S of the cross-sectional areas of all filaments constituting the core strand and the ratio Ps/P of the sum Ps of the strengths of the sheath strands to the strength P of the cord as a whole were changed by changing the cord structure, to prepare steel cords for reinforcing a rubber article of Examples and Comparative Examples in which a plurality of sheath strands having a layered-twisted structure were twisted around one core strand having a layered-twisted structure. The results of the following evaluations for the obtained cords are also shown in the following Tables.

### (Shear Resistance)

For each of the obtained cords, shear resistance was evaluated using a Charpy impact tester. The larger the numerical value is, the more excellent the shear resistance is, which is favorable.

**[Table 1]**

| | | Example 1 | Example 2 | Example 3 | Example 4 | Example 5 | Reference Example 6 | Comparative Example 1 | Comparative Example 2 |
|---|---|---|---|---|---|---|---|---|---|
| Cord structure | | 1+7 | 1+7 | 1+7 | 1+7 | 1+8 | 1+9 | 1+6 | 1+7 |
| Core strand | Structure | 3+8 | 3+8 | 3+8 | 3+8+10 | 3+8 | 3+7 | 3+8 | 3+8 |
| | Core filament diameter (mm) | 0.51 | 0.52 | 0.54 | 0.285 | 0.54 | 0.55 | 0.345 | 0.57 |
| | First sheath filament diameter (mm) | 0.51 | 0.52 | 0.54 | 0.285 | 0.54 | 0.55 | 0.345 | 0.57 |
| | Second sheath filament diameter (mm) | - | - | - | 0.465 | - | - | - | - |
| | Strength | 5392 | 5517 | 5764 | 6714 | 5764 | 5351 | 3252 | 6126 |
| Sheath strand | Structure | 3+8 | 3+8 | 3+8 | 3+8 | 3+8 | 3+8 | 3+8 | 3+8 |
| | Number of sheath strands | 7 | 7 | 7 | 7 | 8 | 9 | 6 | 7 |
| | Core filament diameter (mm) | 0.380 | 0.395 | 0.385 | 0.405 | 0.29 | 0.25 | 0.345 | 0.365 |
| | First sheath filament diameter (mm) | 0.400 | 0.395 | 0.385 | 0.405 | 0.38 | 0.30 | 0.345 | 0.365 |
| | Second sheath filament diameter (mm) | - | - | - | - | - | - | - | - |
| | Strength | 3900 | 3906 | 3775 | 4038 | 3392 | 2501 | 3252 | 3513 |
| Cord diameter (mm) | | 5.36 | 5.44 | 5.44 | 5.48 | 5.01 | 4.56 | 4.30 | 5.40 |
| Cord strength (total strength of filaments) (N) | | 32695 | 32859 | 32189 | 34980 | 32897 | 27856 | 22764 | 30717 |
| Total cross-sectional areas of outermost layer sheath filaments of core strand /total cross-sectional area of core strand (S1/S) | | 0.73 | 0.73 | 0.73 | 0.71 | 0.73 | 0.70 | 0.73 | 0.73 |
| Total strength of sheath strand/cord strength (Ps/P) | | 0.83 | 0.83 | 0.82 | 0.81 | 0.82 | 0.81 | 0.86 | 0.80 |
| Shear resistance (kN) | | 11.2 | 11.7 | 11.1 | 11.3 | 10.7 | 9.8 | 6.4 | 9 |

**[Table 2]**

| | | Comparative Example 3 | Comparative Example 4 | Comparative Example 5 | Comparative Example 6 | Comparative Example 7 | Comparative Example 8 |
|---|---|---|---|---|---|---|---|
| Cord structure | | 1+6 | 1+6 | 1+7 | 1+8 | 1+7 | 1+6 |
| Core strand | Structure | 3+9 | 3+7+13 | 3+8+10 | 3+9+15 | 3+9+15 | 3+8 |
| | Core filament diameter (mm) | 0.36 | 0.24 | 0.32 | 0.32 | 0.26 | 0.25 |
| | First sheath filament diameter (mm) | 0.36 | 0.34 | 0.32 | 0.32 | 0.26 | 0.33 |
| | Second sheath filament diameter (mm) | - | 0.34 | 0.455 | 0.32 | 0.35 | - |
| | Strength | 3761 | 6157 | 7005 | 6982 | 5549 | 2781 |
| Sheath strand | Structure | 3+8 | 3+6+12 | 3+8 | 3+9 | 3+9 | 3+9 |
| | Number of sheath strands | 6 | 6 | 7 | 8 | 7 | 6 |
| | Core filament diameter (mm) | 0.36 | 0.24 | 0.385 | 0.29 | 0.325 | 0.29 |
| | First sheath filament diameter (mm) | 0.36 | 0.24 | 0.385 | 0.29 | 0.325 | 0.29 |
| | Second sheath filament diameter (mm) | - | 0.34 | - | - | - | - |
| | Strength | 3448 | 4966 | 3775 | 2775 | 3264 | 2775 |
| Cord diameter(mm) | | 4.49 | 5.23 | 5.44 | 4.38 | 4.48 | 3.61 |
| Cord strength (total strength of filaments)(N) | | 24449 | 35953 | 33430 | 29182 | 28397 | 19431 |
| Total cross-sectional areas of outermost layer sheath filaments of core strand /total cross-sectional area of core strand (S1/S) | | 0.75 | 0.60 | 0.65 | 0.56 | 0.69 | 0.82 |
| Total strength of sheath strand/cord strength (Ps/P) | | 0.85 | 0.83 | 0.79 | 0.76 | 0.80 | 0.86 |

| | | Comparative Example 3 | Comparative Example 4 | Comparative Example 5 | Comparative Example 6 | Comparative Example 7 | Comparative Example 8 |
|---|---|---|---|---|---|---|---|
| Shear resistance (kN) | | 7.2 | 9.7 | 9.8 | 8.5 | 8.2 | 5.5 |

As can be seen from the results in the above Tables, in each of the cords of the Examples in which a plurality of sheath strands having a layered-twisted structure were twisted around one core strand having a layered-twisted structure, and the ratio S1/S and ratio Ps/P satisfied predetermined ranges, it is obvious that the shear resistance was improved.

### DESCRIPTION OF SYMBOLS

- 1, 2: Steel filament
- 1a, 2a: Core filament
- 1b: First sheath filament
- 1c: Second sheath filament(outermost layer sheath filament)
- 2b: Sheath filament
- 3: Spiral filament
- 11: Core strand
- 12: Sheath strand

## Claims

1. A steel cord for reinforcing a rubber article comprising: one core strand (11) having a layered-twisted structure formed by twisting a plurality of steel filaments (1); and a plurality of sheath strands (12) having a layered-twisted structure formed by twisting a plurality of steel filaments (2), wherein the sheath strands (12) are twisted around the core strand (11),
wherein a ratio S1/S of the sum S1 of cross-sectional areas of outermost layer sheath filaments (1c) constituting an outermost layer sheath of the core strand (11) to the sum S of cross-sectional areas of all filaments (1) constituting the core strand (11) is from 0.71 to 0.73, and a ratio Ps/P of the sum Ps of strengths, that is the breaking loads in Newtons, of the sheath strands (12) to strength P, that is the breaking load in Newtons, of the cord as a whole is from 0.81 to 0.85, the breaking load of the cord as a whole being calculated by summing up the breaking loads of the core strands and sheath strands measured individually, and
wherein the number of the sheath strands (12) is from 7 to 9.

2. The steel cord for reinforcing a rubber article according to claim 1, wherein all the filaments constituting the core strand have the same diameter.

3. The steel cord for reinforcing a rubber article according to claim 1, wherein a cord diameter is equal to or more than 5.00 mm.

4. A pneumatic tire comprising a reinforcing material, wherein said reinforcing material comprises the steel cord for reinforcing a rubber article according to claim 1,

## Patentansprüche

1. Stahlkord zum Verstärken eines Kautschukartikels, umfassend: einen Kernstrang (11) mit einer geschichteten, verdrillten Struktur, der durch Verdrillen einer Vielzahl von Stahlfilamenten (1) gebildet wird; und eine Vielzahl von Mantelsträngen (12) mit einer geschichteten, verdrillten Struktur, die durch Verdrillen einer Vielzahl von Stahlfilamenten (2) gebildet werden, wobei die Mantelstränge (12) um den Kernstrang (11) herum verdrillt sind,
wobei ein Verhältnis S1/S der Summe S1 der Querschnittsflächen der Mantelfilamente der äußersten Schicht (1c), die einen Mantel der äußersten Schicht des Kernstrangs (11) bilden, zur Summe S der Querschnittsflächen aller den Kernstrang (11) bildenden Filamente (1) 0,71 bis 0,73 beträgt und ein Verhältnis Ps/P der Summe Ps der Festigkeiten, d.h. der Bruchlasten in Newton, der Mantelstränge (12) zur Stärke P, d.h. zur Bruchlast in Newton, des Kords als Ganzes 0,81 bis 0,85 beträgt, wobei die Bruchlast des Kords als Ganzes berechnet wird, indem die einzeln gemessenen Bruchlasten der Kernstränge und der Mantelstränge aufsummiert werden, und
wobei die Anzahl der Mantelstränge (12) 7 bis 9 beträgt.

2. Stahlkord zum Verstärken eines Kautschukartikels nach Anspruch 1, wobei alle Filamente, die den Kernstrang bilden, den gleichen Durchmesser haben.

3. Stahlkord zum Verstärken eines Kautschukartikels nach Anspruch 1, wobei ein Korddurchmesser 5,00 mm oder mehr beträgt.

4. Luftreifen, der ein Verstärkungsmaterial umfasst, wobei das Verstärkungsmaterial den Stahlkord zum Verstärken eines Kautschukartikels nach Anspruch 1 umfasst.

## Revendications

1. Câble en acier pour le renforcement d'un article en caoutchouc comprenant : un brin d'âme (11) ayant une structure torsadée en couches formée en torsadant une pluralité de filaments d'acier (1) ; et une pluralité de brins de gaine (12) ayant une structure torsadée en couches formée en torsadant une pluralité de filaments d'acier (2), les brins de gaine (12) étant torsadés autour du brin d'âme (11),
dans laquelle un rapport S1/S de la somme S1 des aires de section transversale des filaments de gaine de couche la plus externe (1c) constituant une gaine de couche la plus externe du brin d'âme (11) à la somme S des aires de section transversale de tous les filaments (1) constituant le brin d'âme (11) est compris entre 0,71 et 0,73, et un rapport Ps/P de la somme Ps des forces, c'est-à-dire les charges de rupture en newtons, des brins de gaine (12) à la résistance P, c'est-à-dire la charge de rupture en newtons, du câble dans son ensemble est compris entre 0,81 et 0,85, la charge de rupture du câble dans son ensemble étant calculée en additionnant les charges de rupture des brins d'âme et des brins de gaine mesurées individuellement, et
dans lequel le nombre de brins de gaine (12) est compris entre 7 et 9.

2. Câble en acier pour le renforcement d'un article en caoutchouc selon la revendication 1, dans lequel tous les filaments constituant le brin d'âme ont le même diamètre.

3. Câble en acier pour le renforcement d'un article en caoutchouc selon la revendication 1, dans lequel un diamètre du cordon est égal ou supérieur à 5,00 mm.

4. Bandage pneumatique comprenant un matériau de renforcement, dans lequel ledit matériau de renforcement comprend le câble en acier pour le renforcement d'un article en caoutchouc selon la revendication 1.
